(19) Europäisches Patentamt
European Patent Office
Office européen des brevets

(11) **EP 3 263 454 B1**

(12) **EUROPEAN PATENT SPECIFICATION**

(45) Date of publication and mention
of the grant of the patent:
**26.09.2018  Bulletin 2018/39**

(51) Int Cl.:
***B64C 29/00*** *(2006.01)*    ***B64C 21/04*** *(2006.01)*

(21) Application number: **17020335.0**

(22) Date of filing: **17.04.2014**

(54) **VTOL AIRCRAFT WITH A THRUST-TO-WEIGHT RATIO SMALLER THAN 0.1**

SENKRECHTSTARTERFLUGZEUG MIT EINEM SCHUBGEWICHTSVERHÄLTNIS KLEINER ALS 0,1

AÉRONEF ADAV AYANT UN RAPPORT POUSSÉE-MASSE INFÉRIEUR À 0,1

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018  Bulletin 2018/01**

(62) Document number(s) of the earlier application(s) in accordance with Art. 76 EPC:
**14075023.3 / 2 933 188**

(73) Proprietor: **Chen, Li Jing**
**78380 Bougival (FR)**

(72) Inventor: **Chen, Li Jing**
**78380 Bougival (FR)**

(56) References cited:
**FR-A1- 2 398 890      GB-A- 792 993
GB-A- 2 469 612      US-A1- 2012 068 020**

**Description**

This invention relates to aircraft, and more particularly, to aircraft with VTOL technology.

Currently, there are three kinds of traditional VTOL technologies which get vertical lift from high-speed air flowing over upper surface of the aircraft. In the first one such as patent No: US2012/0068020, a fan independent of a main engine increases speed of low-temp air flowing over the upper surface of wing along the direction of the chord, thereby increasing vertical lift. In this way, this fan less efficiently increases the vertical lift; in the second one such as patent No: GB792993, a high-temp bypass duct directs high-temp air by a valve from a nozzle of a jet engine to flow radially over the upper surface of the aircraft, thereby generating vertical life. In this way, the high-temp bypass duct generates the vertical lift more efficiently than the first one but the upper surface of the aircraft might be burnt up; in the third one such as patent No: GB2469612, a low-temp bypass duct directs low-temp air, with a rotatable nozzle, from a low-temp duct of a turbofan engine to flow over the upper surface of the wing along the direction of the chord, thereby generating a vertical lift. But another rotatable nozzle spouts high-temp air downwardly from a high-temp duct of a turbofan engine, thereby generating another vertical lift less efficiently. In this way, the low-temp bypass duct generates the vertical lift more efficiently than above ways but thin slot outlet of the low-temp bypass duct, set in the direction of the chord, enables a part of vertical lift to lose in the long low-temp bypass duct and the problem, how the high-temp air is directed to obtain more vertical lift from the upper surface of the aircraft, is not solved. Because of these limitations, VTOL is impossible for aircraft with thrust-to-weight ratio smaller than 0.1, and more particularly for large aircraft.

The present invention is a VTOL aircraft according to claim 1.

The dependent claims define further technical features of said aircraft.

The attached drawings illustrate the invention:

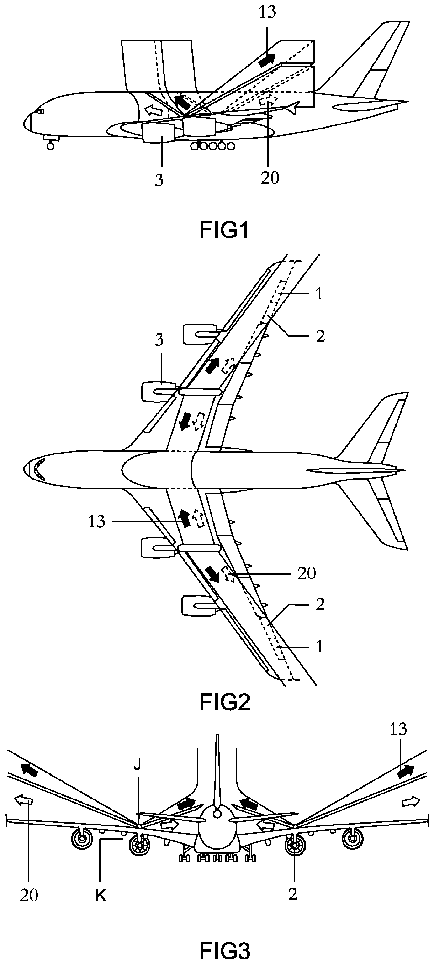

Fig. 1 is a side view of an aircraft with this invention during vertical take-off and landing.
Fig. 2 is a top view of an aircraft with this invention during vertical take-off and landing.
Fig. 3 is a rear view of an aircraft with this invention during vertical take-off and landing.

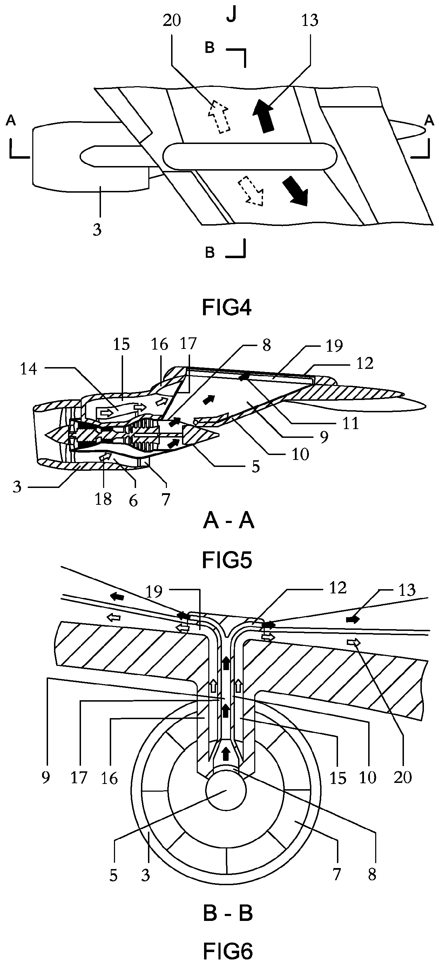

Fig. 4 is J local view for Fig. 3.
Fig. 5 is A-A Section for Fig. 4
Fig. 6 is B-B Section for Fig. 4.

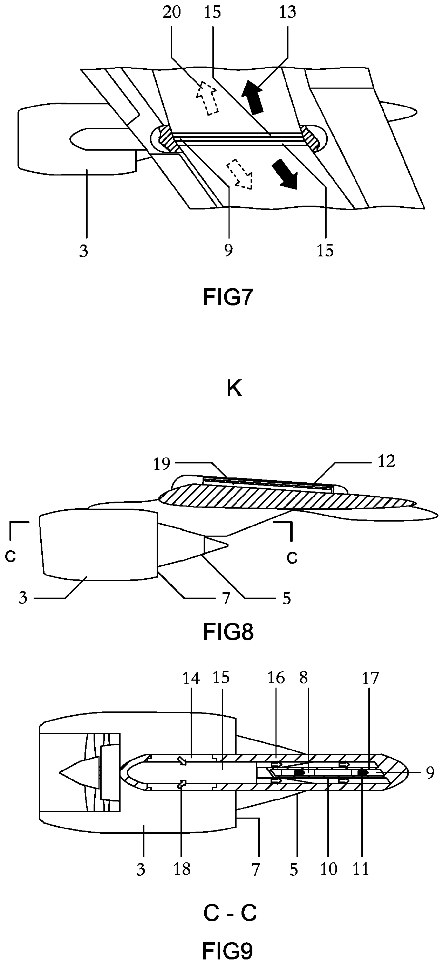

Fig. 7 is part Section for Fig. 4.
Fig. 8 is K local view for Fig. 3.
Fig. 9 is C-C Section for Fig. 8.

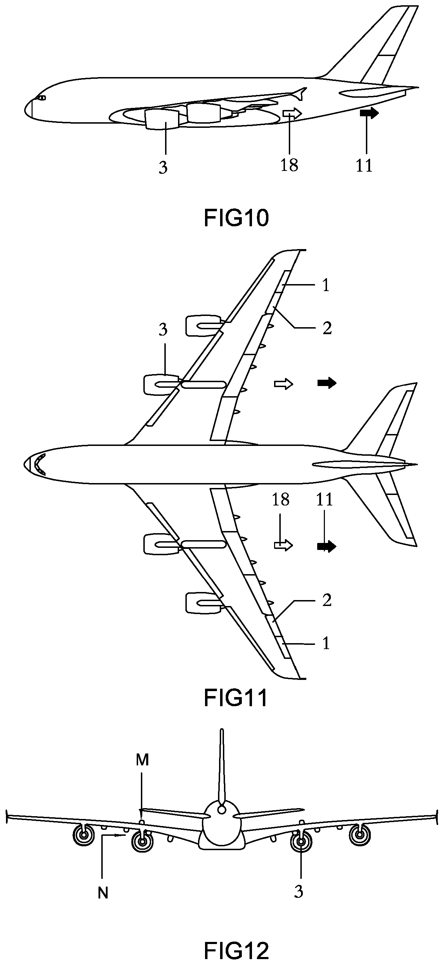

Fig. 10 is a side view of an aircraft with this invention during forward flight.
Fig. 11 is a top view of an aircraft with this invention during forward flight.
Fig. 12 is a rear view of an aircraft with this invention during forward flight.

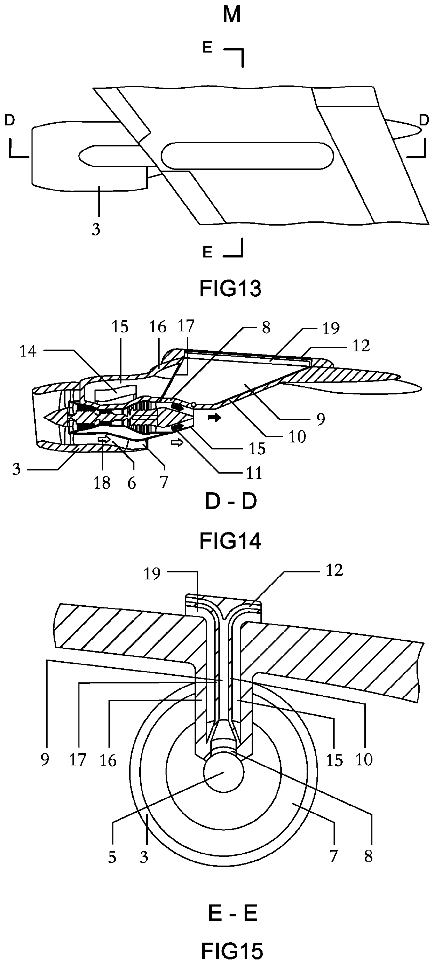

Fig. 13 is M local view for Fig. 12.
Fig. 14 is D-D Section for Fig. 13.
Fig. 15 is E-E Section for Fig. 13.

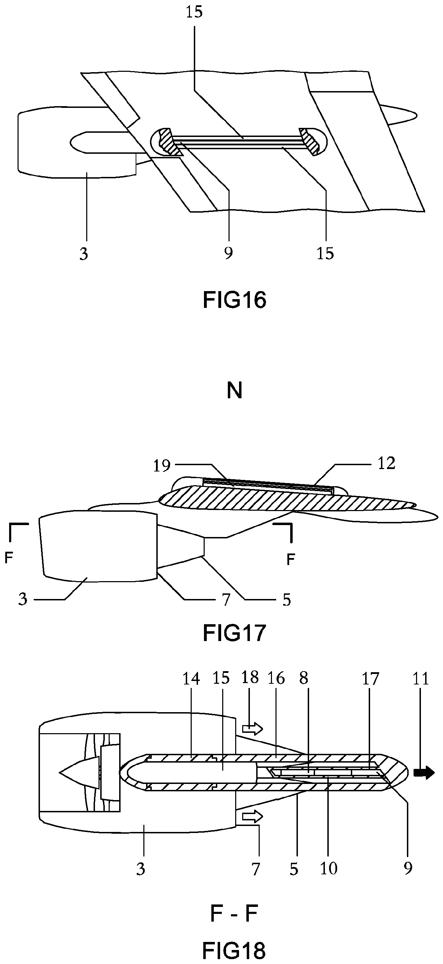

Fig. 16 is part Section for Fig. 13.
Fig. 17 is N local view for Fig. 12.
Fig. 18 is F-F Section for Fig. 17.

Referring to above drawings, an aircraft comprises: ailerons (1, 2); a turbofan engine (3) including a low-temp duct (6) with an openable and closable propelling nozzle (7) and a high-temp duct (4) with an openable and closable propelling nozzle (5); a low-temp bypass duct (15) including an openable and closable inlet (14) connected to the low-temp duct 6), an outer wall (16), an inner wall (17) and a rectangular outlet (19) with a height-to-width ratio smaller than 0.1 set on the upper surface of the wing and in the direction of the wingspan; a high-temp bypass duct (9) including an openable and closable inlet (8) connected to the high-temp duct (4), an outer wall (10) and a rectangular outlet (12) with a height-to-width ratio smaller than 0.1 set above the rectangular outlet (19) of the low-temp bypass duct (15) with a height-to-width ratio smaller than 0.1 and in the direction of the wingspan.

Referring to Fig.(1-9), during vertical take-off/landing, the propelling nozzles (5, 7) of the low-temp duct (6) and the high-temp duct (4) of the turbofan engine (3) are closed. At same time, the inlets (8, 14) of the low-temp bypass duct (15) and the high-temp bypass duct (9) are opened. Then, the turbofan engine (3) starts to supply the low-temp air (18) to the low-temp duct (6) and the high-temp air (11) to the high-temp duct (4). Now, the low-temp bypass duct (15) directs the low-temp air (18) from the low-temp duct (6) and enables it, in form of low-temp planar jet (20), to flow over the upper surface of the wing along the direction of wingspan. Because the velocity of the air flowing over the upper surface of the wing is higher than that over the lower surface of the wing, and according to Principle of Bernoulli stating an increase in the speed occurs simultaneously with a decrease in pressure, a vertical lift is generated on the wing due to the lower pressure on the upper surface of the wing than that on the lower surface of the wing and the low-temp planar jet (20) enables the ailerons to control horizontal and vertical balances of the aircraft. Similarly, the high-temp bypass duct (9) directs the high-temp air (11) from the high-temp duct (4) and enables it, in form of the high-temp planar jet (13), to flow above the low-temp planar jet (20) along the direction of wingspan, thereby generating another vertical lift and enabling the ailerons to control horizontal and vertical balances of the aircraft more efficiently. The rectangular outlet (12) of the high-temp bypass duct (9) with a height-to-width ratio smaller than 0.1 set above the rectangular outlet (19) of the low-temp bypass duct (15) with a height-to-width ratio smaller than 0.1.

Referring to Fig.(10-18), during forward flight, the propelling nozzles (5, 7) of the low-temp duct (6) and high-temp duct (4) of the turbofan engine (3) are opened. At same time, the inlets (8, 14) of the low-temp bypass duct (15) and the high-temp bypass duct (9) are closed. Then, the low-temp air (18) and the high-temp air (11) spout directly from the propelling nozzles (5, 7) of the low-temp duct (6) and the high-temp duct (4) into atmosphere to generate thrusts

This invention can be used to retrofit an existing aircraft to achieve VTOL or manufacture a VTOL aircraft with a thrust-to-weight ratio smaller than 0.1.

**ANNEX 1**

| | | |
|---|---|---|
| $P$ | Atmospheric pressure | (Unit: Pa) |
| $R$ | Ideal gas constant | (Unit: $J.K^{-1}.mol^{-1}$) |
| $\rho_0$ | Low-temp jet density at the outlet | (Unit: $kg/m^3$) |
| $Pi$ | Atmospheric density | (Unit: $kg/m^3$) |
| P | Jet density on the cross-section | (Unit: $kg/m^3$) |
| $\rho_m$ | Jet density of the shaft | (Unit: $kg/m^3$) |
| $T_0$ | Jet temp at the low-temp outlet | (Unit: $K$) |
| $T_1$ | Atmospheric temp | (Unit: $K$) |
| $T$ | Jet temp on the cross-section | (Unit: $K$) |
| $V_0$ | Jet speed at the outlet of low-temp bypass duct | (Unit: $m/s$) |
| $V_0'$ | Jet speed at the outlet of high-temp bypass duct | (Unit: $m/s$) |
| $V$ | Jet speed on the cross-section | (Unit: $m/s$) |
| $V_m$ | Jet speed of shaft | (Unit: $m/s$) |
| $h_0$ | Jet height of the outlet | (Unit: $m$) |
| $h_m$ | Jet height of the cross-section | (Unit: $m$) |
| $h$ | Jet height on the cross-section | (Unit: $m$) |
| $L$ | Width of the outlet | (Unit: $m$) |
| $C$ | Gas specific volume | (Unit: $m^3/kg$) |
| $M$ | Molar mass | (Unit: $kg/mol$) |
| $Q$ | Air inflow of turbofan engine | (Unit: $kg/s$) |
| $B$ | Bypass ratio of turbofan engine | (Dimensionless unit) |
| $G$ | Maximum take-off weight | (Unit: $T$) |
| $X$ | Distance between any point and outlet of low-temp bypass duct in jet direction | (Unit: $m$) |
| $X_1$ | Distance between wing root and low-temp outlet in jet direction | (Unit: $m$) |
| $X_2$ | Distance between low-temp outlet and cross over point at which jet boundary intersects with trailing edge of wing in jet direction | (Unit: $m$) |
| $X_3$ | Distance between wingtip and low-temp outlet in jet direction | (Unit: $m$) |
| $\alpha$ | Angle between jet boundary and trailing edge of wing | (Unit: °) |
| $\beta$ | Angle between chord line of wing and long side of outlet | (Unit: °) |
| $\gamma$ | Dihedral angle of wing | (Unit: °) |
| $\delta$ | Sweep forward angle of jet | (Unit: °) |
| Ø | Included angle between axis of low-temp jet and one of the high-temp jet | (Unit: °) |
| $\theta$ | Sweep back angle of jet | (Unit: °) |
| $F$ | Total vertical lift | (Unit: $T$) |
| $F_1$ | Lift between wing root and low-temp outlet | (Unit: $T$) |
| $F_2$ | Lift between low-temp outlet and cross over point at which jet boundary intersects with trailing edge of wing | (Unit: $T$) |
| $F_3$ | Lift between wingtip and low-temp outlet | (Unit: $T$) |

(continued)

| | | |
|---|---|---|
| $F_4$ | Downward pressure generated by slant upward deflected jet | (Unit: $T$) |
| $F_5$ | Thrust generated by jet of low-temp outlet | (Unit: $T$) |
| $F_6$ | Thrust generated by jet of high-temp outlet | (Unit: $T$) |
| $b$ | Constant | (Dimensionless unit) |
| $d$ | Constant | (Dimensionless unit) |
| $C$ | Constant | (Dimensionless unit) |
| $n_1$ | S/N of turbofan engine | (Dimensionless unit) |
| $n_2$ | S/N of turbofan engine used in vertical Take-off/landing | (Dimensionless unit) |
| $n_3$ | S/N of outlet of low-temp bypass duct | (Dimensionless unit) |
| $TWR$ | Thrust-to-weight ratio of aircraft | (Dimensionless unit) |

According to thermodynamic, relative values of the enthalpy of various jet cross-sections are same each other when pressures of these jet cross-sections are equal and the value of surrounding gas is starting value.

And according to the feature of planar jet, it just spread on the flat which is perpendicular to the outlet section.

$$P = \frac{\rho_0}{M} R T_0 = \frac{\rho_1}{M} R T_1 = \frac{\rho}{M} R T$$

$$\rho_0 V_0 h_0 L C (T_0 - T_1) = \int \rho V L\, C (T - T_1) dh$$

$$\rho_0 V_0 h_0 \left( \frac{1}{\rho_0} - \frac{1}{\rho_1} \right) = \int \rho V \left( \frac{1}{\rho} - \frac{1}{\rho_1} \right) dh$$

And according to the similarity of velocity and density distribution on the various jet sections,

$$\sqrt{\frac{V}{V_m}} = \frac{\rho - \rho_1}{\rho_m - \rho_1} = 1 - 1 - \left( \frac{h}{h_m} \right)^{1.5}$$

$$h_0 V_0 (\rho_0 - \rho_1) = \int (\rho - \rho_1) V dh$$

$$\frac{h_0 V_0 (\rho_0 - \rho_1)}{(\rho_m - \rho_1) V_m h_m} = \int \frac{(\rho - \rho_1) V}{(\rho_m - \rho_1) V_m h_m} dh = \int_0^{h_m} \left[ 1 - \left( \frac{h}{h_m} \right)^{1.5} \right]^3 \cdot \frac{1}{h_m} dh$$

$$= \int_0^1 \left[ 1 - \left( \frac{h}{h_m} \right)^{1.5} \right]^3 d\left( \frac{h}{h_m} \right) = 0.3682$$

$$(\rho_m - \rho_1) = \frac{h_0 V_0 (\rho_0 - \rho_1)}{0.3682 \cdot V_m h_m} \qquad (1)$$

According to dynamic characteristic of jet, momentums of the various sections, are same each other in case of equal pressures.

$$\rho_0 L h_0 V_0^2 = \int \rho L V^2 dh$$

$$\rho_0 h_0 V_0^2 = \int \rho V^2 dh = \int (\rho - \rho_1) V^2 dh + \int \rho_1 V^2 dh$$

$$\frac{\rho_0 h_0 V_0^2}{(\rho_m - \rho_1) V_m^2 h_m}$$

$$= \int_0^1 \frac{(\rho - \rho_1) V^2}{(\rho_m - \rho_1) V_m^2} d\left(\frac{h}{h_m}\right) + \int_0^1 \frac{\rho_1 V^2}{(\rho_m - \rho_1) V_m^2} d\left(\frac{h}{h_m}\right)$$

$$= \int_0^1 \left[1 - \left(\frac{h}{h_m}\right)^{1.5}\right]^5 d\left(\frac{h}{h_m}\right) + \frac{\rho_1}{(\rho_m - \rho_1)} \int_0^1 \left[1 - \left(\frac{h}{h_m}\right)^{1.5}\right]^4 d\left(\frac{h}{h_m}\right)$$

$$= 0.2786 + \frac{0.3156 \rho_1}{(\rho_m - \rho_1)}$$

$$\frac{0.3682 V_0 \rho_0}{V_m (\rho_0 - \rho_1)} = 0.2786 + \frac{0.1162 h_m V_m \rho_1}{h_0 V_0 (\rho_0 - \rho_1)} \tag{2}$$

Substitute (1) into (2):

$$\frac{0.1162 h_m \rho_1}{h_0 \rho_0} \cdot \left(\frac{V_m}{V_0}\right)^2 + 0.2786 \frac{(\rho_0 - \rho_1)}{\rho_0} \cdot \left(\frac{V_m}{V_0}\right) - 0.3682 = 0$$

$$\frac{V_m}{V_0} = \frac{\dfrac{0.2786(\rho_1 - \rho_0)}{\rho_0} + \sqrt{\left[\dfrac{0.2786(\rho_0 - \rho_1)}{\rho_0}\right]^2 + \dfrac{0.1711 h_m \rho_1}{h_0 \rho_0}}}{\dfrac{0.2324 h_m \rho_1}{h_0 \rho_0}}$$

$$V_m = \frac{1 + \sqrt{1 + \dfrac{0.1711 h_m \rho_0 \rho_1}{0.2786^2 h_0 (\rho_0 - \rho_1)^2}}}{\dfrac{0.2324 h_m \rho_1}{0.2786 h_0 (\rho_0 - \rho_1)}} V_0 \tag{3}$$

Substitute (3) into (1)

$$(\rho_m - \rho_1) = \frac{h_0 V_0 (\rho_0 - \rho_1)}{0.3682 \cdot V_m h_m}$$

$$\rho_m = \rho_1 - \frac{\dfrac{0.2324}{0.3682 \times 0.2786} \rho_1}{1 + \sqrt{1 + \dfrac{0.1711 h_m \rho_0 \rho_1}{0.2786^2 h_0 (\rho_0 - \rho_1)^2}}} \tag{4}$$

When $X \leq X_1$ or $X \leq X_2$

$$F = \left[P - \left(P - \frac{1}{2} \int \rho_m V_m^2\right)\right] L dx = \frac{1}{2} \int \rho_m V_m^2 L dx$$

Substitute (3), (4) into (2)

$$= \frac{1}{2}\int_0^X \left[\rho_1 - \frac{\frac{0.2324}{0.3682 \times 0.2786}\rho_1}{1 + \sqrt{1 + \frac{0.1711 h_m \rho_0 \rho_1}{0.2786^2 h_0 (\rho_0 - \rho_1)^2}}}\right] \cdot \left[\frac{1 + \sqrt{1 + \frac{0.1711 h_m \rho_0 \rho_1}{0.2786^2 h_0 (\rho_0 - \rho_1)^2}}}{\frac{0.2324 h_m \rho_1}{0.2786 h_0 (\rho_0 - \rho_1)}}\right]^2 \cdot V_0^2 L \, dx$$

$$= \frac{1}{2}\int_0^X \left\{\rho_1 \left[\frac{1 + \sqrt{1 + \frac{0.1711 h_m \rho_0 \rho_1}{0.2786^2 h_0 (\rho_0 - \rho_1)^2}}}{\frac{0.2324 h_m \rho_1}{0.2786 h_0 (\rho_0 - \rho_1)}}\right]^2 \right.$$

$$\left. - \frac{0.2324}{0.3682 \times 0.2786}\rho_1 \cdot \left[\frac{1 + \sqrt{1 + \frac{0.1711 h_m \rho_1 \rho_0}{0.2786^2 h_0 (\rho_1 - \rho_0)^2}}}{\frac{0.2324 h_m \rho_1}{0.2786 h_0 (\rho_1 - \rho_0)}}\right]\right\} \cdot V_0^2 L \, dx$$

$$= \frac{1}{2}\int_0^X \left\{\rho_1 \left\{\frac{2 + \frac{0.1711 h_m \rho_1 \rho_0}{0.2786^2 h_0 (\rho_1 - \rho_0)^2} + 2\sqrt{1 + \frac{0.1711 h_m \rho_1 \rho_0}{0.2786^2 h_0 (\rho_1 - \rho_0)^2}}}{\left[\frac{0.2324 h_m \rho_1}{0.2786 h_0 (\rho_1 - \rho_0)}\right]^2}\right.\right.$$

$$\left.\left. - \frac{\frac{0.2324}{0.3682 \times 0.2786} + \frac{0.2324}{0.3682 \times 0.2786}\sqrt{1 + \frac{0.1711 h_m \rho_1 \rho_0}{0.2786^2 h_0 (\rho_1 - \rho_0)^2}}}{\left[\frac{0.2324 h_m \rho_1}{0.2786 h_0 (\rho_1 - \rho_0)}\right]^2}\right\}\right\} \cdot V_0^2 L \, dx$$

$$= \frac{1}{2}\int_0^X \left\{\frac{0.1711 \rho_0}{0.2324^2 \left(\frac{h_m}{h_0}\right)} - \frac{1.2655}{\left[\frac{0.2324 \rho_1}{0.2786 (\rho_1 - \rho_0)}\right]^2 \left(\frac{h_m}{h_0}\right)^2} - \frac{0.2655 \sqrt{1 + \frac{0.1711 \rho_1 \rho_0}{0.2786^2 (\rho_1 - \rho_0)^2} \cdot \left(\frac{h_m}{h_0}\right)}}{\left[\frac{0.2324 \rho_1}{0.2786 (\rho_1 - \rho_0)} \cdot \left(\frac{h_m}{h_0}\right)\right]^2}\right\}$$

$$\cdot V_0^2 L \, dx$$

Because of

$$\frac{h_m}{h_0} = 2.44 \left(\frac{0.12x}{h_0} + 0.41\right)$$

When $X \le X_2$ or $X \le X_3$

$$F_1 = \frac{1}{2} \int_{1.0004}^{2.44\left(\frac{0.12X_1}{h_0}+0.41\right)} \left\{ \frac{0.1711\rho_0}{0.2324^2\left(\frac{h_m}{h_0}\right)} - \frac{1.2655}{\left[\frac{0.2324\rho_1}{0.2786(\rho_1-\rho_0)}\right]^2 \left(\frac{h_m}{h_0}\right)^2} \right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot\left(\frac{h_m}{h_0}\right)\right]^2} \right\} \cdot \frac{h_0 V_0^2 L}{2.44 \times 0.12} \, d\left(\frac{h_m}{h_0}\right)$$

$$= \frac{1}{2} \int_{1.0004}^{2.44\left(\frac{0.12X_1}{h_0}+0.41\right)} \left\{ \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655}{\left[\frac{0.2324\rho_1}{0.2786(\rho_1-\rho_0)}\right]^2} \cdot \frac{\sqrt{1+\frac{0.1711\rho_1\rho_0}{0.2786^2(\rho_1-\rho_0)^2}\cdot x}}{\cdot x^2} \right\} \cdot \frac{h_0 V_0^2 L}{2.44 \times 0.12} \, dx$$

$$\int \frac{\sqrt{1+bx}}{x^2} dx = -\left( \frac{\sqrt{1+bx}}{x} - \frac{b}{2} \ln\frac{\sqrt{1+bx}-1}{\sqrt{1+bx}+1} + C \right)$$

$$F_1 = \left\{ \frac{0.1711\rho_0}{0.2324^2} \ln x + \frac{1.2655}{\left[\frac{0.2324\rho_1}{0.2786(\rho_1-\rho_0)}\right]^2 x} + \frac{0.2655}{\left[\frac{0.2324\rho_1}{0.2786(\rho_1-\rho_0)}\right]^2} \cdot \left[ \frac{\sqrt{1+\frac{0.1711\rho_1\rho_0}{0.2786^2(\rho_1-\rho_0)^2}\cdot x}}{x} \right. \right.$$

$$\left. \left. - \frac{0.1711\rho_1\rho_0}{2\times 0.2786^2(\rho_1-\rho_0)^2} \ln\frac{\sqrt{1+\frac{0.1711\rho_1\rho_0}{0.2786^2(\rho_1-\rho_0)^2}\cdot x}-1}{\sqrt{1+\frac{0.1711\rho_1\rho_0}{0.2786^2(\rho_1-\rho_0)^2}\cdot x}+1} \right] \right\}_{2.44\times 0.41}^{2.44\left(\frac{0.12X_1}{h_0}+0.41\right)}$$

$$\times \frac{1}{2} \times \frac{h_0 V_0^2 L}{2.44 \times 0.12} \tag{5}$$

$$F_2 = \left\{ \frac{0.1711\rho_0}{0.2324^2} \ln x + \frac{1.2655}{\left[\frac{0.2324\rho_1}{0.2786(\rho_1-\rho_0)}\right]^2 x} + \frac{0.2655}{\left[\frac{0.2324\rho_1}{0.2786(\rho_1-\rho_0)}\right]^2} \cdot \left[ \frac{\sqrt{1+\frac{0.1711\rho_1\rho_0}{0.2786^2(\rho_1-\rho_0)^2}\cdot x}}{x} \right. \right.$$

$$\left. \left. - \frac{0.1711\rho_1\rho_0}{2\times 0.2786^2(\rho_1-\rho_0)^2} \ln\frac{\sqrt{1+\frac{0.1711\rho_1\rho_0}{0.2786^2(\rho_1-\rho_0)^2}\cdot x}-1}{\sqrt{1+\frac{0.1711\rho_1\rho_0}{0.2786^2(\rho_1-\rho_0)^2}\cdot x}+1} \right] \right\}_{2.44\times 0.41}^{2.44\left(\frac{0.12X_2}{h_0}+0.41\right)}$$

$$\times \frac{1}{2} \times \frac{h_0 V_0^2 L}{2.44 \times 0.12} \tag{6}$$

When $X_2 \leq X \leq X_3$

$$F_3 = \frac{1}{2}\int_{X_2}^{X_3}\left\{\frac{0.1711\rho_0}{0.2324^2\left(\frac{h_m}{h_0}\right)} - \frac{1.2655}{\left[\frac{0.2324\rho_1}{0.2786(\rho_1-\rho_0)}\right]^2\left(\frac{h_m}{h_0}\right)^2}\right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot\left(\frac{h_m}{h_0}\right)\right]^2}\right\} \times V_0^2[L-(x-X_2)\times\tan\alpha]dx \qquad (7)$$

When force is zero in body axis direction,

$$F_4 = F_5 + F_6$$

$$(F_4 + F_5 + F_6)\sin\delta = (F_5 + F_6)\sin\theta$$

$$\delta = \sin^{-1}\frac{1}{2}\sin\theta \qquad (8)$$

$$F = n_2(F_1 + F_2 + F_3)\cos\beta\cos\gamma - n_2[F_4\cos\delta + F_6\sin(\emptyset+\gamma) - F_6\sin(\emptyset-\gamma)] \qquad (9)$$

VTOL can be achieved once: *F > G*

**ANNEX 2**

$n_1$ = 1-4
$n_2$ = 1~2
$n_3$ = 1~4
*M* = 29 *kg/mol*
Q(*Air inflow of Trent* 900 *turbofan engine*) = 1204 *kg/s*
B(*Bypass ratio of Trent 900turbofan engine*) = 8.5:1
G(*Maximum take - off weight of A*380) = 560 *T*
$T_0$ = 383*K*
$\rho_1$ = 1.293*kg/m*$^2$

Assuming:

$\theta$ = 36.5°

$$F_4 = \frac{1}{n_2}QV_0 = \frac{1}{2}\times 1204 \times 211 = 127022N = 13\,T$$

$$\rho_0 = \frac{MP_0}{RT_0} = \frac{101325 \times 29 \times 0.001}{8.31 \times 383} = 0.9232\,kg/m^3$$

$h_0$ = 0.46m
*L = 6m*

$$V_0 = \frac{\frac{1}{n_2} \times Q \times \frac{8.5}{8.5+1}}{\rho_0 \times L \times h_0} = \frac{\frac{1}{2} \times 1204 \times \frac{8.5}{8.5+1}}{0.9232 \times 6 \times 0.46} = 211 m/s$$

$$V_0' = V_0 = 211 \; m/s$$

$$F_6 = \frac{1}{n_2} Q \times \frac{1}{8.5+1} \times V_0' = 11370.7368 \; N = 1.4 \; T$$

$X_1 = 11 \; m$
$X_2 = 18 \; m$
$X_3 = 32 \; m$
$\alpha = 14°$
$\beta = 5°$
$\gamma = 5°$
$\theta = 36.5°$
$\emptyset = 2 \times 16.3°$

$$F_1 = 209832.582 \left[ 2.9246 \, ln \, x + \frac{0.1488}{x} + 0.0312 \cdot \left[ \frac{\sqrt{1 + 19.2419x}}{x} \right. \right.$$

$$\left. -9.621 \, ln \, \frac{\sqrt{1+19.2419x}-1}{\sqrt{1+19.2419x}+1} \right]_{2.44 \times 0.41}^{2.44\left(\frac{0.12X_1}{h_0}+0.41\right)}$$

$$= 209832.582 \left\{ 2.9246 \, ln \, \frac{2.44\left(\frac{0.24 \times 11}{0.32}+0.41\right)}{2.44 \times 0.46} \right.$$

$$+0.1488 \left[ \frac{1}{2.44\left(\frac{0.12 \times 11}{0.46}+0.41\right)} - \frac{1}{2.44 \times 0.41} \right]$$

$$+0.0312 \cdot \left[ \frac{\sqrt{1 + 19.2419 \times 2.44\left(\frac{0.12 \times 11}{0.32}+0.41\right)}}{2.44\left(\frac{0.12 \times 11}{0.46}+0.41\right)} - \frac{\sqrt{1 + 19.2419 \times 2.44 \times 0.41}}{2.44 \times 0.41} \right.$$

$$-9.621 \, ln \, \frac{\sqrt{1 + 19.2419 \times 2.44\left(\frac{0.12 \times 11}{0.46}+0.41\right)} - 1}{\sqrt{1 + 19.2419 \times 2.44\left(\frac{0.12 \times 11}{0.46}+0.41\right)} + 1}$$

$$\left. \left. +9.621 \, ln \, \frac{\sqrt{1 + 19.2419 \times 2.44 \times 0.41} - 1}{\sqrt{1 + 19.2419 \times 2.44 \times 0.41} + 1} \right] \right\}$$

$$= 209832.582[6.0811 - 0.1301 - 0.0918 - 0.0873]$$

$$= 1211132.68 N$$

$$= 124 T \tag{5}$$

$$F_2 = 209832.582 \left\{ 2.9246 \, ln \frac{2.44 \left( \frac{0.12 \times 18}{0.46} + 0.41 \right)}{2.44 \times 0.41} \right.$$

$$+ 0.1488 \left[ \frac{1}{2.44 \left( \frac{0.12 \times 18}{0.46} + 0.41 \right)} - \frac{1}{2.44 \times 0.41} \right]$$

$$+ 0.0312 \cdot \left[ \frac{\sqrt{1 + 19.2419 \times 2.44 \left( \frac{0.12 \times 18}{0.46} + 0.41 \right)}}{2.44 \left( \frac{0.12 \times 18}{0.46} + 0.41 \right)} \right.$$

$$\left. - \frac{\sqrt{1 + 19.2419 \times 2.44 \times 0.41}}{2.44 \times 0.41} \right] - 9.621 \, ln \frac{\sqrt{1 + 19.2419 \times 2.44 \left( \frac{0.12 \times 18}{0.46} + 0.41 \right)} - 1}{\sqrt{1 + 19.2419 \times 2.44 \left( \frac{0.24 \times 18}{0.32} + 0.41 \right)} + 1}$$

$$\left. + 9.621 \, ln \frac{\sqrt{1 + 19.2419 \times 2.44 \times 0.41} - 1}{\sqrt{1 + 19.2419 \times 2.44 \times 0.41} + 1} \right] \right\}$$

$$= 209832.582[7.3757 - 0.1368 - 0.1015 - 0.0969]$$

$$= 1477326.2936 N$$

$$= 151 T \tag{6}$$

$$F_3 = \frac{1}{2} \int_{2.44\left(\frac{0.12X_2}{h_0}+0.41\right)}^{2.44\left(\frac{0.12X_3}{h_0}+0.41\right)} \left\{ \frac{0.1711\rho_0}{0.2324^2\left(\frac{h_m}{h_0}\right)} - \frac{1.2655}{\left[\frac{0.2324\rho_1}{0.2786(\rho_1-\rho_0)}\right]^2 \left(\frac{h_m}{h_0}\right)^2} \right.$$

$$\left. - \frac{0.2655\sqrt{1 + \frac{0.1711\rho_1\rho_0}{0.2786^2(\rho_1-\rho_0)^2} \cdot \left(\frac{h_m}{h_0}\right)}}{\left[\frac{0.2324\rho_1}{0.2786(\rho_1-\rho_0)} \cdot \left(\frac{h_m}{h_0}\right)\right]^2} \right\}$$

$$\times \left[L - \left(\frac{h_0}{2.44\times0.12} \times \left(\frac{h_m}{h_0}\right) - \frac{0.41h_0}{0.12} - X_2\right) \times tan\,\alpha\right] \frac{h_0 V_0^2}{2.44\times0.12} d\left(\frac{h_m}{h_0}\right)$$

$$= \frac{1}{2} \int_{2.44\left(\frac{0.12X_2}{h_0}+0.41\right)}^{2.44\left(\frac{0.12X_3}{h_0}+0.41\right)} \left\{ \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655\sqrt{1 + \frac{0.1711\rho_1\rho_0}{0.2786^2(\rho_1-\rho_0)^2} \cdot \left(\frac{h_m}{h_0}\right)}}{\left[\frac{0.2324\rho_1}{0.2786(\rho_1-\rho_0)} \cdot x\right]^2} \right\}$$

$$\cdot \left[L - \left(\frac{h_0}{2.44\times0.12} x - \frac{0.41h_0}{0.12} - X_2\right) \times tan\,\alpha\right] \frac{h_0 V_0^2}{2.44\times0.12} dx$$

$$= \frac{1}{2} \int_{2.44\left(\frac{0.12X_2}{h_0}+0.41\right)}^{2.44\left(\frac{0.12X_3}{h_0}+0.41\right)} \left\langle \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655\sqrt{1 + \frac{0.1711\rho_1\rho_0}{0.2786^2(\rho_1-\rho_0)^2} \cdot x}}{\left[\frac{0.2324\rho_1}{0.2786(\rho_1-\rho_0)}\right]^2 x^2} \right\} \cdot \left[1 + \left(\frac{0.41h_0}{0.12\times L} + \frac{X_2}{L}\right) \cdot tan\,\alpha\right]$$

$$- \left\{ \frac{0.1711\rho_0}{0.2324^2} - \frac{1.2655}{\left[\frac{0.2324\rho_1}{0.2786(\rho_1-\rho_0)}\right]^2 x} - \frac{0.2655\sqrt{1 + \frac{0.1711\rho_1\rho_0}{0.2786^2(\rho_1-\rho_0)^2} \cdot x}}{\left[\frac{0.2324\rho_1}{0.2786(\rho_1-\rho_0)} \cdot\right]^2 x} \right\}$$

$$\frac{h_0\,tan\,\alpha}{2.44\times0.12\times L} \right\rangle \frac{h_0 V_0^2 L}{2.44\times0.12} dx$$

$$\int \frac{\sqrt{1+dx}}{x} dx = 2\sqrt{1+dx} - ln\frac{\sqrt{1+dx}-1}{\sqrt{1+dx}+1} + C$$

$$F_3 = 151501.6393\left\{1.8133 \times \left[2.9246\,ln\,x + \frac{0.1488}{x}\right.\right.$$

$$\left. + 0.0312 \cdot \left(\frac{\sqrt{1+19.2419x}}{x} - 9.621\,ln\frac{\sqrt{1+19.2419x}-1}{\sqrt{1+19.2419x}+1}\right)\right]$$

$$\left. - 0.0653\left[2.9246x - 0.1488ln\,x - 0.0312\left(2\sqrt{1+19.2419x} - ln\frac{\sqrt{1+19.2419x}-1}{\sqrt{1+19.2419x}+1}\right)\right]\right\}_{12.4578}^{21.3691}$$

$$= 209832.582\left\{1.8133 \times \left[2.9246\,ln\frac{21.3691}{12.4578} + 0.1488\left(\frac{1}{21.3691} - \frac{1}{12.4578}\right)\right.\right.$$

$$+0.0312\left(\frac{\sqrt{1+19.2419\times 21.3691}}{21.3691}-\frac{\sqrt{1+19.2419\times 12.4578}}{12.4578}\right.$$

$$-9.621\,ln\frac{\sqrt{1+19.2419\times 21.3691}-1}{\sqrt{1+19.2419\times 21.3691}+1}+9.621\,ln\frac{\sqrt{1+19.2419\times 12.4578}-1}{\sqrt{1+19.2419\times 12.4578}+1}\Bigg)\Bigg]$$

$$-0.0653[2.9246(21.3691-12.4578)-0.1488ln\frac{21.3691}{12.4578}-0.0312\big(2\sqrt{1+19.2419\times 21.3691}$$

$$-2\sqrt{1+19.2419\times 12.4578}-ln\frac{\sqrt{1+19.2419\times 21.3691}-1}{\sqrt{1+19.2419\times 21.3691}+1}$$

$$+ln\frac{\sqrt{1+19.2419\times 12.4578}-1}{\sqrt{1+19.2419\times 12.4578}+1}\Big)\Big]\Big\}$$

$$= 209832.582\{1.8133\times[1.5781-0.005+0.0312(-0.2953-0.2934)]$$

$$-0.0653[26.062-0.0803-0.0312(9.5748-0.0305)]\}$$

$$= 239636.5129N$$

$$= 24T \tag{7}$$

$$\delta = \sin^{-1}\left(\frac{1}{2}sin\,\theta\right)$$

$$= sin^{-1}\left(\frac{1}{2}si\,n\,36.5°\right)$$

$$= 17.3° \tag{8}$$

According to this sweep forward angle, low-temp planar jet enables the aircraft to keep balances during vertical take-off/landing.

$$F = n_2(F_1+F_2+F_3)\,cos\,\beta\,cos\,\gamma - n_2[F_4\,cos\,\delta+F_6\,sin(\emptyset+\gamma)-F_6\,sin(\emptyset-\gamma)]$$

$$= 2(124+151+24)\,cos\,5°\,cos\,5° - 2[13\,cos\,17.3°+1.4\,sin(2\times 16.3°+5°)$$

$$-1.4\,sin(2\times 16.3°-5°)]$$

$$= 568\,T \tag{9}$$

$$F-G = 568-560 = 8\,T > 0$$

$$TWR = \frac{n_3(F_5+F_6)}{G} = \frac{n_3F_4}{G} = \frac{4\times 13}{560} = 0.09 < 0.1 \tag{10}$$

It is clearly demonstrated above that VTOL is achievable on Airbus A380 once remodeled as shown, and more particularly, in case of using just two turbofan engines and thrust-to-weight ratio smaller than 0.1.

**Claims**

1.  An aircraft capable of vertical take-off/landing, comprising:

- two wings; - ailerons (1,2), one pair of which in use rotates in opposite direction to control horizontal balance and another pair (2) of which rotates in same direction to control vertical balance during vertical take-off/lading, the ailerons of each pair being disposed on the wings on both sides of the aircraft axis;
- a turbofan engine (3) comprising a high-temp duct (4) with an openable/closable propelling nozzle (5) and a low-temp duct (6) with an openable/closable propelling nozzle (7);
- a high-temp bypass duct (9) having an openable and closable inlet (8) which is connected to the high-temp duct (4) and is configured to:

a) direct high-temp air (11) from the high-temp duct (4) into the high-temp bypass duct (9) during vertical take-off/landing when said inlet (8) is open and the propelling nozzle (5) of the high-temp duct (4) is closed, and

b) direct high-temp air (11) from the high-temp duct (4) into atmosphere during forward flight when said inlet is (8) closed and the propelling nozzle (5) of the high-temp duct (4) is open;

- said high-temp bypass duct (9) having an outer wall (10), any cross-sectional area of said high-temp bypass duct (9) being large enough to avoid choking of high-temp air (11);
- said high-temp bypass duct (9) having a rectangular outlet (12) having a height-to-width ratio smaller than 0.1 allowing to change high-temp air (11) into a high-temp planar jet (13) during vertical take-off/landing;
- a low-temp bypass duct (15) having an openable and closable inlet (14) which is connected to the low-temp duct (6) and is configured to:

a) direct low-temp air (18) from the low-temp duct (6) into the low-temp bypass duct (15) during vertical take-off/landing when said inlet (14) is open and the propelling nozzle (7) of the low-temp duct (6) is closed, and

b) direct low-temp air (18) from the low-temp duct (6) into atmosphere during forward flight when said inlet (14) is closed and the propelling nozzle (7) of the low-temp duct (6) is open;

- said low-temp bypass duct (15) having an outer wall (16) and an inner wall (17), any cross-sectional area of said low-temp bypass duct (15) being large enough to avoid choking of low-temp air (18);
- said low-temp bypass duct (15) having a rectangular outlet (19) having a height-to-width ratio smaller than 0.1 allowing to change low-temp air into a low-temp planar jet (20) and being located on an upper wing surface and being configured to expel low-temp air in the direction of the wingspan such that the low-temp planar jet (20) is directed over the upper wing surface during take-off/landing in order to generate lift and control of vertical and horizontal balances; wherein the rectangular (12) outlet of the high-temp bypass duct (9) is located above the rectangular outlet (19) of the low-temp bypass duct (15).

2. The aircraft according to claim 1 wherein the low-temp duct (6) spouts directly low-temp air (18) into the atmosphere in order to generate a thrust during forward flight when the propelling nozzle (7) of low-temp duct (6) is open and the inlet (14) of the low-temp bypass duct (15) is closed.

3. The aircraft according to claim 1 wherein the high-temp duct (4) spouts directly high-temp air (11) into the atmosphere in order to generate another thrust during forward flight when the propelling nozzle (5) of high-temp duct (4) is open and the inlet (8) of the high-temp bypass duct (9) is closed.

4. The aircraft according to claim 1 wherein the low-temp bypass duct (15) directs the low-temp air (18) from the low-temp duct (6) to flow, in form of low-temp planar jet (20), over the upper surface of the wing and in the direction of the wingspan, thereby generating a vertical lift and wherein the the ailerons (1, 2) control horizontal and vertical balances of the aircraft during vertical take-off/landing when the propelling nozzle (7) of low-temp duct (6) is closed and the inlet (14) of the low-temp bypass duct (15) is open.

5. The aircraft according to claim 1 wherein the high-temp bypass duct (9) directs the high-temp air (18) from the high-temp duct (4) to flow, in form of high-temp planar jet (13), above the low-temp planar jet (20) in the direction of the wingspan, thereby generating another vertical lift and wherein the ailerons (1, 2) control horizontal and vertical balances of the aircraft more efficiently during vertical take-off/landing when the propelling nozzle (5) of high-temp duct (4) is closed and the inlet (8) of the high-temp bypass duct (9) is open.

**Patentansprüche**

1. Ein Flugzeug, das vertikal starten / landen kann, bestehend aus:

   - Schleppflügelquerruder (1,2), in denen ein Paar (1) in entgegengesetzter Richtung rotiert, um das Horizontalgleichgewicht zu steuern, und ein anderes Paar (2) in derselben Richtung rotiert, um das Vertikalgleichgewicht während des Vertikalabhebens zu steuern, die Querruder (1, 2) jedes Paares ist auf beiden Seiten der Flugzeugachse angeordnet;
   - ein Turbofantriebwerk (3) mit einem Hochtemperaturkanal (4) mit einer zu öffnenden / schließbaren Schubdüse (5) und einem Niedertemperaturkanal (6) mit einer zu öffnenden / schließbaren Schubdüse (7);
   - einen Hochtemperatur-Bypass-Kanal (9) mit einem zu öffnenden und schließbaren Einlass (8), der mit dem Hochtemperaturkanal (4) verbunden ist und konfiguriert ist zum:

   a) direkte Hochtemperaturluft (11) von dem Hochtemperaturkanal (4) in den Hochtemperatur-Bypass-Kanal (9) während des vertikalen Startens / Landens, wenn der Einlass (8) offen ist und die Antriebsdüse (5) der Hochtemperaturleitung (4) ist geschlossen
   b) und Hochtemperaturluft (11) von der Hochtemperaturleitung (4) während des Vorwärtsflugs in die Atmosphäre leiten, wenn der Einlass (8) geschlossen ist und die Antriebsdüse (5) des Hochtemperaturkanals (4) ist geöffnet.

   - sagte Hochtemperatur-Bypass-Kanal (9) eine Außenwand (10) des Hochtemperatur-Bypass-Kanals (9) aufweist, in der jede Querschnitts Fläche groß genug ist, um ein Verstopfen der Hochtemperaturluft (11) zu vermeiden.
   - sagte Hochtemperatur-Umgehungskanal (9) einen rechteckigen Auslass (12) mit einem Verhältnis von Höhe zu Breite von weniger als 0.1 aufweist, wodurch die Hochtemperaturluft (11) während der vertikalen Aufnahme in den Hochtemperatur-Flachstrahl (13) geändert werden kann aus / Landung;
   - einen Niedrigtemperatur-Bypass-Kanal (15) mit einem zu öffnenden und zu schließenden Einlass (14), der mit dem Niedertemperaturkanal (6) verbunden ist und der konfiguriert ist zum:

   a) direkte Niedertemperaturluft (18) von dem Niedertemperaturkanal (6) in den Niedertemperatur-Bypass-Kanal (15) während des vertikalen Startens / Landens, wenn der Einlass (14) geöffnet ist und die Antriebsdüse (7) des Niedertemperaturkanals (6) ist geschlossen und
   b) direkte Niedertemperaturluft (18) von dem Niedertemperaturkanal (6) in die Atmosphäre während des Vorwärtsflugs, wenn der Einlass (14) geschlossen ist und die Antriebsdüse (7) des Niedertemperaturkanals (6) geöffnet ist.

   - sagte Niedrig-Temperatur-Bypass-Kanal (15) eine Außenwand (16) und eine Innenwand (17) des Niedrig-Temperatur-Bypass-Kanals (15) aufweist, wobei jede Querschnitts Fläche des Niedrig-Temperatur-Bypass-Kanals (15) groß ist genug, um ein Ersticken der Luft bei niedriger Temperatur zu vermeiden (18).
   - sagte Niedrig-Temperatur-Umgehungskanal (15) mit niedriger Temperatur einen rechteckigen Auslass (19) des Umgehungskanals (15) mit niedriger Temperatur aufweist, der ein Verhältnis von Höhe zu Breite von weniger als 0.1 aufweist, um die Niedrigtemperaturluft in den Niedrigtemperaturflachstrahl zu wechseln (20) und auf einer oberen Fläche des Flügels angeordnet und konfiguriert ist, um Luft mit niedriger Temperatur (18) in der Richtung der Spannweite auszutreiben, so dass der Flachstrahls (20) während der vertikalen Aufnahme über die obere Flügelfläche gerichtet ist -ab / Landung, um den Aufzug und die Macht zu erzeugen, die vertikale und horizontale Balancen steuert;

   Wobei der rechteckige (12) Auslass des Hochtemperatur-Bypass-Kanals (9) über dem rechteckigen Auslass (19) des Niedrigtemperatur-Bypass-Kanals (15) angeordnet ist.

2. Das Flugzeug nach Anspruch 1, wobei die Niedertemperaturleitung (6) direkt Niedertemperaturluft (18) in die Atmosphäre ausstößt, um einen Schub während des Vorwärtsflugs zu erzeugen, wenn die Treibdüse (7) mit niedriger Temperatur der Kanal (6) ist offen und der Einlass (14) des Niedrigtemperatur-Bypass-Kanals (15) ist geschlossen.

3. Flugzeug nach Anspruch 1, wobei der Hochtemperaturkanal (4) direkt Hochtemperaturluft (11) in die Atmosphäre ausstößt, um während des Vorwärtsflugs einen weiteren Schub zu erzeugen, wenn die Treibdüse (5) von Hochtemperatur der Kanal (4) ist offen und der Einlass (8) des Hochtemperatur-Bypass-Kanals (9) ist geschlossen.

**4.** Das Flugzeug gemäß Anspruch 1, wobei der Niedrig-Temperatur-Bypass-Kanal (15) die Niedrigtemperatur-Luft (18) von dem Niedertemperatur-Kanal (6) in Form eines Niedrig-Temperatur-Flachstrahls (20), über die obere Fläche des Flügels und in Richtung der Spannweite, wodurch ein vertikaler Auftrieb erzeugt wird und wobei die Querruder (1, 2) horizontale und vertikale Auswuchtungen des Flugzeugs während des vertikalen Start / Landevorgangs der Schubdüse steuern (7) der Niedertemperaturkanal (6) ist geschlossen und der Einlass (14) des Niedertemperatur-Bypass-Kanals (15) ist offen.

**5.** Flugzeug nach Anspruch 1, wobei der Hochtemperatur-Bypass-Kanal (9) die Hochtemperaturluft (18) von dem Hochtemperaturkanal (4) in Form eines Hochtemperatur-Flachstrahls (13) leitet, oberhalb des Tiefsttemperatur Strahls (20) in Richtung der Spannweite, wodurch ein weiterer Vertikalhub erzeugt wird und wobei die Querruder (1, 2) beim vertikalen Start / Landevorgang Horizontal- und Vertikalbilanzen des Flugzeugs effizienter steuern wenn die Treibdüse (5) des Hochtemperaturkanals (4) geschlossen ist und der Einlass (8) des Hochtemperatur-Bypass-Kanals (9) off en ist.

**Revendications**

**1.** un aéronef à décollage et à atterrissage vertical, comprenant :

- deux ailerons d'aile (1,2) parmi lesquels une paire (1) tourne en sens inverse afin de contrôler l'équilibre horizontal et une autre paire (2) tourne dans le même sens afin de contrôler l'équilibre vertical lors d'un décollage/atterrissage vertical, les ailerons (1,2) de chaque paire sont situés des deux côtés de l'axe de l'aéronef ;
- un turboréacteur à double flux (3) comprenant un conduit haute température (4) avec une tuyère propulsive ouvrable/fermable (5) et un conduit basse température (6) avec une tuyère propulsive ouvrable/fermable (7) ;
- un conduit de dérivation haute température (9) doté d'une entrée ouvrable et fermable (8) connectée au conduit haute température (4) et configurée pour :

   a) diriger l'air haute température (11) du conduit haute température (4) vers le conduit de dérivation haute température (9) lors d'un décollage/atterrissage vertical lorsque (8) ladite entrée est ouverte et que la tuyère propulsive (5) du conduit haute température (4) est fermée
   b) et diriger l'air haute température (11) du conduit haute température (4) vers l'atmosphère lors d'un vol vers l'avant lorsque ladite entrée (8) est fermée et que la tuyère propulsive (5) du conduit haute température (4) est ouverte.

- ledit conduit de dérivation haute température (9) est doté d'une paroi extérieure (10) du conduit de dérivation haute température (9) dans laquelle toute section transversale est suffisamment grande pour éviter un étranglement de l'air haute température (11).
- ledit conduit de dérivation haute température (9) est doté d'une sortie rectangulaire (12) dont le rapport hauteur/largeur est inférieur à 0,1 ce qui permet de transformer l'air haute température (11) en un jet plan haute température (13) lors d'un décollage/atterrissage vertical ;
- un conduit de dérivation basse température (15) doté d'une entrée ouvrable et fermable (14) connectée au conduit basse température (6) et configurée pour :

   a) diriger l'air basse température (18) du conduit basse température (6) vers le conduit de dérivation basse température (15) lors d'un décollage/atterrissage vertical lorsque ladite entrée (14) est ouverte et que la tuyère propulsive (7) du conduit basse température (6) est fermée et
   b) diriger l'air basse température (18) du conduit basse température (6) vers l'atmosphère lors d'un vol vers l'avant lorsque ladite entrée (14) est fermée et que la tuyère propulsive (7) du conduit basse température (6) est ouverte.

- ledit conduit de dérivation basse température (15) est doté d'une paroi extérieure (16) et d'une paroi intérieure (17) du conduit de dérivation basse température (15), toute section transversale dudit conduit de dérivation basse température (15) étant suffisamment grande pour éviter un étranglement de l'air basse température (18).
- ledit conduit de dérivation basse température (15) est doté d'une sortie rectangulaire (19) du conduit de dérivation basse température (15), dont le rapport hauteur/largeur est inférieur à 0,1 ce qui permet de transformer l'air basse température en un jet plan basse température (20), qui est située sur une surface supérieure de l'aile et configurée pour évacuer l'air basse température (18) dans la direction de la voilure de sorte que le jet plan basse température (20) est dirigé au-dessus de la surface supérieure de l'aile lors d'un décollage/atterrissage vertical de façon à générer la portance et la puissance contrôlant l'équilibre vertical et horizontal ;

Dans lequel la sortie rectangulaire (12) du conduit de dérivation haute température (9) est située au-dessus de la sortie rectangulaire (19) du conduit de dérivation basse température (15).

2. l'aéronef selon la revendication 1 dans lequel le conduit basse température (6) évacue l'air basse température (18) directement dans l'atmosphère de façon à générer une poussée lors d'un vol vers l'avant lorsque la tuyère propulsive (7) du conduit basse température (6) est ouverte et que l'entrée (14) du conduit de dérivation basse température (15) est fermée.

3. l'aéronef selon la revendication 1 dans lequel le conduit haute température (4) évacue l'air haute température (11) directement dans l'atmosphère de façon à générer une autre poussée lors d'un vol vers l'avant lorsque la tuyère propulsive (5) du conduit haute température (4) est ouverte et que l'entrée (8) du conduit de dérivation haute température (9) est fermée.

4. l'aéronef selon la revendication 1 dans lequel le conduit de dérivation basse température (15) dirige l'air basse température (18) depuis le conduit basse température (6) de sorte que l'air s'écoule, sous la forme d'un jet plan basse température (20), au-dessus de la surface supérieure de l'aile et dans la direction de la voilure, générant ainsi une portance verticale et dans lequel les ailerons (1, 2) contrôlent l'équilibre vertical et horizontal de l'aéronef lors d'un décollage/atterrissage vertical lorsque la tuyère propulsive (7) du conduit basse température (6) est fermée et que l'entrée (14) du conduit de dérivation basse température (15) est ouverte.

5. l'aéronef selon la revendication 1 dans lequel le conduit de dérivation haute température (9) dirige l'air haute température (18) depuis le conduit haute température (4) de sorte que l'air s'écoule, sous la forme d'un jet plan haute température (13), au-dessus du jet plan basse température (20) dans la direction de la voilure, générant ainsi une autre portance verticale et dans lequel les ailerons (1, 2) contrôlent l'équilibre vertical et horizontal de l'aéronef plus efficacement lors d'un décollage/atterrissage vertical lorsque la tuyère propulsive (5) du conduit haute température (4) est fermée et que l'entrée (8) du conduit de dérivation haute température (9) est ouverte.

EP 3 263 454 B1

FIG1

FIG2

FIG3

J

20  13

B

A  A

3

**FIG4**

15 16 17  8  19

14  12

11

9

3  10

18 6 7  5

**A - A**

**FIG5**

19  12  13

9 17 16  15 10 20

5 3  7 8

**B - B**

**FIG6**

20    15    13

3    9    15

## FIG7

K

19    12

C    C

3    7    5

## FIG8

14    15    16    8    17

9

3    18    7    5    10    11

## C - C

## FIG9

FIG10

FIG11

FIG12

M

FIG13

D - D

FIG14

E - E

FIG15

FIG16

N

FIG17

F - F

FIG18

**EP 3 263 454 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120068020 A
- GB 792993 A
- GB 2469612 A